# EUROPÄISCHE PATENTANMELDUNG

(11) **EP 1 265 425 A1**
(43) Veröffentlichungstag der Anmeldung: **11.12.2002**
(21) Anmeldenummer: 02011124.1
(22) Anmeldetag: 18.05.2002
(51) Int. Cl.: H04M 1/247, H04M 1/27

(54) **Adaptive Menu-Steuerung eines Telekommunikationsgerätes**

(30) Priorität: 31.05.2001 DE 10126600
(71) Anmelder: Tenovis GmbH & Co. KG, 60326 Frankfurt am Main (DE)
(72) Erfinder: Schmidt, Thorsten, 61118 Bad Vilbel (DE)
(74) Vertreter: Patentanwaltskanzlei WILHELM & BECK

(57) **Zusammenfassung**

Die Erfindung betrifft ein Verfahren zur Steuerung von unterschiedlichen Funktionen eines Telekommunikationsgerätes (1), die in Form von Auswahlmenüs auf einer Anzeige (4) des Telekommunikationsgerätes (1) ausgegeben werden. Um die Eingabe zu vereinfachen, wird erfindungsgemäß vorgeschlagen, dass jeder Funktion eine individuelle Priorität zugeordnet wird und dass bei der nächsten Benutzung des Telekommunikationsgerätes (1) die Funktionen in Abhängigkeit von ihrer Priorität auf der Anzeige (4) des Telekommunikationsgerätes (1) aufgelistet werden. Bei dem entsprechend ausgebildeten Telekommunikationsgerät (1) beziehungsweise der Telekommunikationsanlage legt eine Steuerung (3) für jede Funktion eine Priorität fest und listet die Funktionen bei der nächsten Benutzung entsprechend der Priorität auf der Anzeige (4) auf.

## Beschreibung

Die Erfindung geht aus von einem Verfahren zur Steuerung von unterschiedlichen Funktionen eines Telekommunikationsgerätes, die in Form von Auswahlmenüs auf einer Anzeige des Telekommunikationsgerätes ausgegeben werden, nach der Gattung der nebengeordneten Ansprüche 1, 7 und 11. Bei bekannten Telekommunikationsgeräten, die auch als Endgeräte einer Telekommunikationsanlage benutzt werden, werden häufig Auswahlmenüs für die unterschiedlichen Funktionen wie Rufumleitung, Gebührenanzeige, Einstellungen usw. auf einer Anzeige des Telekommunikationsgerätes dargestellt. Dabei kann es vorkommen, dass seltener benutzte Funktionen im oberen Bereich der Anzeige dargestellt werden, während häufiger benutzte Funktionen wie beispielsweise die Telefonbuchfunktion nicht direkt, sondern erst nach Weiterschalten der Anzeige einsichtig sind.

Bei mobilen Funktelefonen (Handys) werden beispielsweise die Funktionen wahlweise als Kurzmenü ausgegeben. In diesem Kurzmenü werden nur einige Funktionen angezeigt. Bei der alternativen Langform des Menüs werden dagegen sämtliche Funktionen auf der Anzeige angezeigt. Nachteilig ist dabei, dass der Benutzer keinen Einfluss auf die Anzahl der Funktionen sowie deren Reihenfolge auf der Anzeige hat. Da die Anzeige des Handys oder auch bei drahtgebundenen Telefongeräten in der Regel aus nur wenigen Zeilen besteht, ist es relativ schwierig, sich eine Übersicht über alle verfügbaren Funktionen zu verschaffen, insbesondere wenn sie sehr häufig genutzt werden.

Bekannt ist weiter beispielsweise bei Computerprogrammen wie Microsoft Word 2000, dass die Verwendung einer Funktion, die nicht standardmäßig in einem Kurzmenü erscheint, registriert wird. Beim nächsten Aufruf des Kurzmenüs wird dann diese Funktion mitaufgenommen und auf der Anzeige (Display) des Computer dargestellt. Dieses Verfahren wird allerdings nur bei Computern genutzt, die ohnehin schon ein relativ großes Display mit vielen Zeilen haben. Nachteilig ist, dass die Häufigkeit der angewählten Funktionen nicht dauerhaft registriert wird, so dass beim nächsten Einschalten des Computers das geänderte Kurzmenü gelöscht beziehungsweise zurückgestellt ist.

Das erfindungsgemäße Verfahren zur Steuerung von unterschiedlichen Funktionen eines Telekommunikationsgerätes beziehungsweise das Telekommunikationsgerät oder die Telekommunikationsanlage mit den kennzeichnenden Merkmalen der nebengeordneten Ansprüche 1, 7 und 11 hat demgegenüber den Vorteil, dass die wichtigsten und am häufigsten benutzten Funktionen kontinuierlich erfasst und von dem Telekommunikationsgerät als Auswahlmenü in Abhängigkeit von ihrer Priorität auf der Anzeige des Telekommunikationsgerätes aufgelistet werden. Als besonders vorteilhaft wird dabei angesehen, dass durch dieses Verfahren nicht nur die Übersichtlichkeit verbessert wird, sondern auch, dass der Benutzer auf die am häufigsten benutzten Funktionen einen schnelleren Zugriff hat. Besonders vorteilhaft ist auch, dass beispielsweise bei Handys, die wichtigsten Funktionen durch weniger Tastendrucke und somit schneller zugänglich sind.

Durch die in den abhängigen Ansprüchen angeführten Maßnahmen sind vorteilhafte Weiterbildungen und Verbesserungen des in den Nebenansprüchen angegebenen Verfahrens beziehungsweise des Telekommunikationsgerätes und der Telekommunikationsanlage gegeben. Als besonders vorteilhaft wird angesehen, dass die Funktion mit der höchsten Priorität auf der Anzeige an der ersten Stelle ausgegeben wird. Dadurch hat man einen sehr schnellen Zugriff auf diese Funktion und behält leicht die Übersicht über die dargestellten Funktionen.

Die Priorität der einzelnen Funktionen kann auf einfache Weise durch Zählen der Benutzungshäufigkeit bestimmt werden. Die Zähltechnik kann beispielsweise mit einem einfachen Softwareprogramm durchgeführt werden und ist somit in eine Steuerungssoftware leicht integrierbar.

Vorteilhaft ist auch, die Priorität wahlweise vom Benutzer vorzugeben. Dadurch kann die Priorität einer Funktion nach den Wünschen des Benutzers vorgegeben und diese Funktion auf der Anzeige des Telekommunikationsgerätes an übersichtlicher Stelle platziert werden.

Günstig ist weiterhin, dass der Benutzer eine neue Funktion eingeben kann, für die ebenfalls eine Priorität ermittelt oder festgelegt wird. Dadurch wird eine weitgehende Gestaltungsfreiheit für den Benutzer in vorteilhafter Weise erreicht.

Als Vorteil wird weiterhin angesehen, dass der Benutzer auch eine Funktion aus der Prioritätenliste löschen kann. Dadurch wird vermieden, dass beispielsweise sehr selten benutzte Funktionen im Auswahlmenü die Prioritätenliste unnötig verlängern und damit die Übersicht erschweren.

Bei dem Telekommunikationsgerät zählt in vorteilhafter Weise eine Steuerung mittels eines Zählers die Häufigkeit einer vom Benutzer aufgerufenen Funktion. Der Zähler kann dabei in elektronischer Form oder als Softwareprogramm ausgebildet sein.

Insbesondere drahtgebundene oder drahtlose Telekommunikationsgeräte wie Telefone, Faxgeräte, Handys und dergleichen haben eine relativ geringe Anzeigekapazität, so dass durch die Wichtung die Anzeige der wählbaren Funktionen vereinfacht wird.

Bei einer Telekommunikationsanlage ergibt sich die vorteilhafte Möglichkeit, dass eine Zentrale, an die mehrere Telekommunikationsgeräte angeschlossen sind, die Prioritäten der Funktionen vorgibt. Dadurch können alle Telekommunikationsgeräte (Endgeräte) einheitlich gesteuert werden.

Ein weiterer Vorteil besteht auch darin, dass beispielsweise ein Operator der Telekommunikationsanlage die Prioritäten der einzelnen Funktionen manuell vorgibt. Dieses kann beispielsweise nach seinem Erfahrungsschatz, aus wirtschaftlichen oder ergonomischen Gesichtspunkten erfolgen.

Der Erfindung liegt die Aufgabe zugrunde, durch eine dynamische Anordnung von Funktionen eines Auswahlmenüs die Bedienung eines Telekommunikationsgerätes zu vereinfachen. Diese Aufgabe wird mit den Merkmalen der nebengeordneten Ansprüchen 1, 7 und 11 gelöst.

Ausführungsbeispiele der Erfindung sind in der Zeichnung dargestellt und werden in der nachfolgenden Beschreibung näher erläutert.
Figur 1 zeigt ein Blockschaltbild eines Telekommunikationsgerätes,
Figur 2 zeigt ein Blockschaltbild einer Telekommunikationsanlage,
Figur 3a zeigt ein erstes Auswahlmenü und
Figur 3b zeigt ein zweites Auswahlmenü.

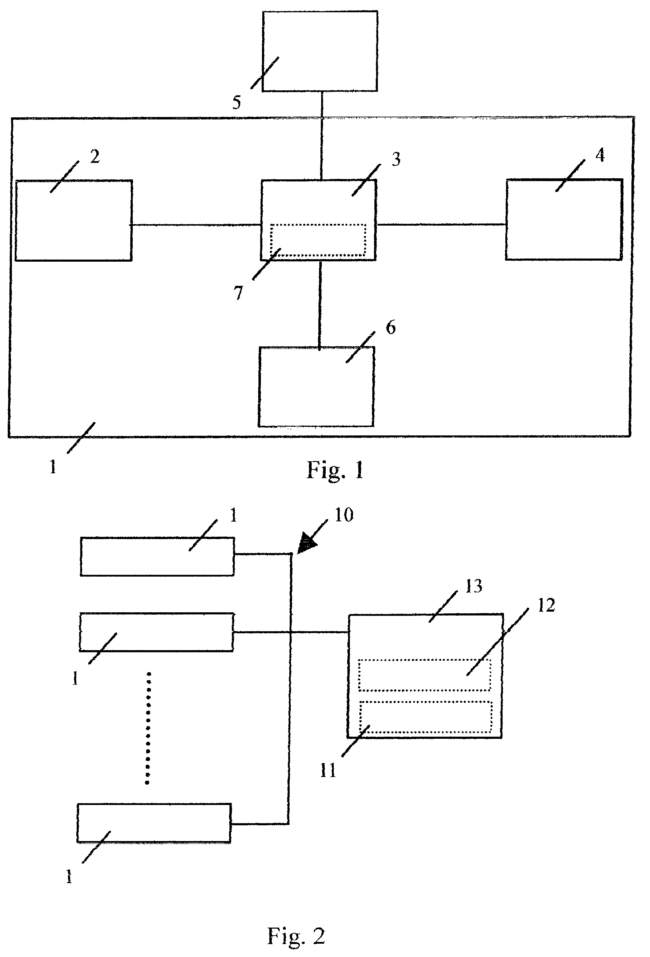

Das Blockschaltbild der Figur 1 zeigt in schematischer Ausführung ein Telekommunikationsgerät 1, das beispielsweise ein drahtgebundener Telefonapparat, ein Faxgerät, ein Telefoncomputer oder dergleichen sein kann. In alternativer Ausgestaltung der Erfindung ist auch vorgesehen, dass das Telekommunikationsgerät 1 drahtlos betrieben wird, beispielsweise als Handy oder dergleichen.

Im schematischen Aufbau weist das Telekommunikationsgerät 1 eine Steuerung 3 auf, die mit einem Speicher 6 verbunden ist. In dem Speicher 6 sind beispielsweise wählbare Funktionen des Telekommunikationsgerätes 1 vorzugsweise in Form eines Auswahlmenüs (Menü) abgelegt. Bei einem modernen Komforttelefon als Telekommunikationsgerät 1 sind beispielsweise wählbare Funktionen die Rufumleitung, Gebührenanzeige, Einstellungen, Service, Telefonbuch usw. Diese Funktionen können auch Untermenüs enthalten, in denen eine weitere Aufschlüsselung wahlweise vorgeschlagen wird. Die Auswahlmenüs sind in einer bestimmten Reihenfolge, vorzugsweise in Form einer Liste organisiert, und werden insbesondere bei Benutzung des Telekommunikationsgerätes 1 auf einer Anzeige 4 wenigstens auszugsweise dargestellt. Die Steuerung 3 ist zu diesem Zweck mit der Anzeige 4 verbunden und steuert den entsprechenden Datenfluss.

Des weiteren ist die Steuerung 3 mit einer Anwahlvorrichtung 2 verbunden, mit der die Funktionen des Auswahlmenüs steuerbar sind. Die Anwahlvorrichtung 2 hat beispielsweise entsprechende Funktionstasten, wobei jede Funktionstaste einer Funktion auf der Anzeige 4 zugeordnet sein kann, damit diese Funktion von einem Benutzer schnell und auf einfache Weise ausgewählt werden kann. In alternativer Ausgestaltung der Erfindung ist vorgesehen, dass die Anwahlvorrichtung 2 eine Cursorsteuerung aufweist, mit deren Hilfe die einzelnen anwählbaren Funktionen aufrufbar sind.

Die Steuerung 3 ist weiterhin mit einem Zähler 7 verbunden, in dem die Häufigkeit der einzelnen angewählten Funktionen gezählt werden. Diese gefundenen Werte werden zusammen mit den Funktionen vorzugsweise ebenfalls in dem Speicher 6 abgelegt. Des weiteren weist die Steuerung 3 eine Rechenlogik auf, mit der jeder auswählbaren Funktion eine individuelle Priorität zugeordnet werden kann. In alternativer Ausgestaltung kann die Rechenlogik auch als Softwareprogramm ausgebildet sein.

Vollständigkeitshalber wird noch darauf hingewiesen, dass die Steuerung 3 mit einem Handapparat 5 verbunden ist, wie er beispielsweise bei einem als Telefonapparat ausgebildeten Endgerät üblich ist.

In einer weiteren Ausführungsform der Erfindung sind die als Endgeräte geschalteten Telekommunikationsgeräte 1 mit einer Telekommunikationsanlage 13 über ein entsprechendes Verbindungsnetz 10 verbunden. Das Verbindungsnetz 10 kann dabei sowohl als drahtgebundenes oder als drahtloses Netz beziehungsweise in gemischter Form aufgebaut sein.

Die Telekommunikationsanlage 13 - wie in Figur 2 dargestellt - ist ebenso wie die Telekommunikationsgeräte 1 per se bekannt und muss daher in ihren Einzelheiten nicht näher erläutert werden. Wesentlicher Bestandteil der Telekommunikationsanlage 13 ist eine Zentrale 11, über die der Daten- beziehungsweise Informationsfluss zu den einzelnen Telekommunikationsgeräten 1 gesteuert wird. Die Zentrale 11 weist entsprechende Steuerprogramme auf, die ebenfalls per se bekannt sind. Zusätzlich ist die Zentrale 11 mit einem zentralen Speicher 12 verbunden, in dem die wählbaren Funktionen der Telekommunikationsanlage 13 verfügbar sind, wobei die wählbaren Funktionen dann von den aktivierten Telekommunikationsgeräten 1 abgerufen werden. Die Telekommunikationsanlage 13 weist in diesem Fall ebenfalls für jede Funktion einen Zähler auf, wie zuvor zu dem Telekommunikationsgerät 1 der Figur 1 beschrieben wurde. Die einzelnen anwählbaren Funktionen sind mit einer Priorität belegt. Bei Bedarf werden die in einer Prioritätenliste zusammengestellten Funktionen an das aktivierte Telekommunikationsgerät 1 gesendet und entsprechend ihrer aktuellen Priorität auf der Anzeige 4 des Telekommunikationsgerätes 1 dargestellt. Im Regelfall ist vorgesehen, dass die Funktion mit der höchsten Priorität auf der Anzeige 4 an erster Stelle dargestellt wird. Die weiteren Funktionen der Prioritätenliste werden nach fallender Priorität angezeigt.

Bei der Telekommunikationsanlage 13 ergibt sich der Vorteil, dass durch die zentrale Verwaltung sehr viel mehr Zugriffe auf die einzelnen Funktionen gezählt werden, so dass die Bestimmung der Prioritäten mit größerer Zuverlässigkeit durchgeführt werden kann.

In alternativer Ausgestaltung der Erfindung ist vorgesehen, dass in die Prioritätenliste manuell eingegriffen werden kann. Der Operator kann somit in vorteilhafter Weise dieses nutzen und aus übergeordneten Gesichtspunkten entscheiden, welche Funktionen mit welcher Priorität für die einzelnen Telekommunikationsgeräte 1 freigegeben werden können. Dabei können auch neue Funktionen für einzelne Telekommunikationsgeräte 1 aufgenommen oder nicht gewünschte Funktionen aus der Prioritätenliste gestrichen werden.

Entsprechend ist auch vorgesehen, dass der Benutzer des Telekommunikationsgerätes 1 - wie oben beschrieben - für sein spezielles Endgerät seine individuelle Prioritätenliste aufstellen kann.

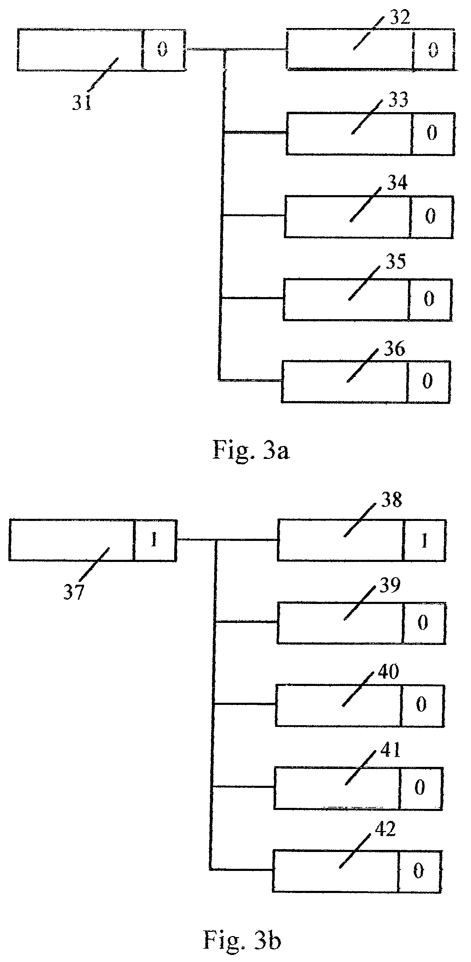

Die dynamische Bestimmung der Prioritäten für die Prioritätenliste wird anhand der Figuren 3a und 3b näher erläutert. Figur 3a zeigt beispielsweise ein erstes Auswahlmenü, das je nach Aufbau der Telekommunikationsanlage 13 entweder zentral in der Telekommunikationsanlage 13 oder dezentral in dem Telekommunikationsgerät 1 gespeichert ist. Zu jedem Menüelement des Hauptmenüs oder von Untermenüs sind entsprechende Zähler 7 vorgesehen, die die Anzahl der angewählten Funktionen individuell speichern. In Position 31 ist beispielhaft ein Hauptmenü dargestellt, bei dem der Zählerstand 0 ist. Zu diesem Hauptmenü gehören erwähnte Untermenüs, wie die Funktion der Rufumleitung (Position 32), Gebührenberechnung und -anzeige (Position 33), Einstellungen (Position 34), Service (Position 35) und Telefonbuch (Position 36). Diese Auflistung von Funktionen ist nur beispielhaft und in Abhängigkeit von der realisierten Telekommunikationsanlage ausgestaltet. Die Zählerstände zu den Positionen 31 - 36 sind auf 0 gesetzt und können gegebenenfalls vom Operator oder dem Benutzer abgefragt werden. Es wird angenommen, dass die dargestellten Funktionen einer Grundeinstellung entsprechen, wenn keine besondere Häufigkeit der Funktionsauswahlen vorliegt.

Figur 3b zeigt nun den Fall, wenn beispielsweise die Funktion Telefonbuch (Position 38), einmal aufgerufen wurde. Da die Funktion Telefonbuch ein Untermenü zum Hauptmenü (Position 37) ist, wird sowohl der Zähler des Hauptmenüs als auch des Telefonbuchs um einen Punkt heraufgesetzt. Bei wiederholter Anwahl würden die zugeordneten Zähler 7 die Zählerstände um die entsprechende Anzahl erhöhen. Da die Funktionen Rufumleitung (Position 39), Gebührenberechnung und -anzeige (Position 40), Einstellungen (Position 41), Service (Position 42) nicht angewählt wurden, bleiben deren Zählerstände auf 0 stehen. Die zuletzt genannten Funktionen haben somit eine niedrigere Priorität als die Funktion Telefonbuch. Die Funktion Telefonbuch wird somit bei der nächsten Benutzung des Telekommunikationsgerätes 1 an erster Stelle gesetzt, gefolgt von den nachfolgenden Funktionen der Positionen 39 bis 42. Diese Prioritätenliste bleibt zunächst bestehen, solange keinen wesentlichen Änderungen bezüglich ihrer Prioritäten entstehen. Würde beispielsweise die Funktion Einstellungen gemäß Position 41 häufiger angewählt werden als die Funktion Telefonbuch (Position 38), dann würde bei der nächsten Benutzung des Telekommunikationsgerätes 1 die Prioritätenliste wieder geändert und die Funktion Einstellungen beispielsweise an erste Stelle gesetzt, gefolgt von der Funktion Telefonbuch. In diesem Beispiel wurde davon ausgegangen, dass die Funktionen Rufumleitung, Gebührenberechnung und -anzeige sowie Service nicht benutzt wurden.

Wie schon erwähnt wurde, wird die so gewonnene Prioritätenliste im Falle der Telekommunikationsanlage 13 an alle angeschlossenen Telekommunikationsgeräte 1 gesendet, wenn sie von diesen abgerufen wird. Darüber hinaus ist vorgesehen, dass individuell der Benutzer des Telekommunikationsgerätes 1 sich seine spezielle Prioritätenliste aufstellen kann. Beispielsweise kann er die Funktion Service in der Prioritätenliste streichen und/oder persönliche Rufnummern als neue Funktion hinzufügen. Dadurch hat er die allgemeine Prioritätenliste von den für ihn unwichtigen Funktionen befreit und damit in vorteilhafter Weise eine bessere Übersicht erreicht. Dieses ist insbesondere dann von Vorteil, wenn das individuelle Telekommunikationsgerät 1 einer geringeren Komfortklasse entspricht, bei der die Anzeige 4 auf nur sehr wenige Zeilen beschränkt ist.

In entsprechender Weise kann der Operator bestimmte Funktionen der Telekommunikationsanlage 13 für einzelne Teilnehmer sperren, in dem er einfach diese von der Prioritätenliste streicht. Das kann er machen, wenn er mehrere Prioritätenlisten anlegt, die für einzelne Benutzergruppen freigegeben werden sollen. Beispielsweise kann dies wirtschaftlich sinnvoll sein, wenn nur für den internen Betrieb genutzte Telekommunikationsgeräte 1 keinen Zugang ins öffentliche Netz haben sollen. Es kann auch sein, dass eine andere Benutzergruppe ein Telekommunikationsgerät 1 mit Komforteinrichtungen wie Lauthören oder Lautsprechen hat, so dass die entsprechenden Funktionen über die zugeordnete Prioritätenliste steuerbar sind.

### Bezugszeichenliste

- 1: Telekommunikationsgerät
- 2: Anwahlvorrichtung
- 3: Steuerung
- 4: Anzeige
- 5: Handapparat
- 6: Speicher
- 7: Zähler
- 10: Verbindungsnetz
- 11: Zentrale
- 12: Speicher
- 13: Telekommunikationsanlage

## Patentansprüche

1. Verfahren zur Steuerung von unterschiedlichen Funktionen eines Telekommunikationsgerätes (1), die in Form eines Auswahlmenüs auf einer Anzeige (4) des Telekommunikationsgerätes (1) ausgegeben werden, **dadurch gekennzeichnet, dass** jeder Funktion eine individuelle Priorität zugeordnet wird und dass bei der nächsten Benutzung des Telekommunikationsgerätes (1) die Funktionen in Abhängigkeit von ihrer Priorität auf der Anzeige (4) aufgelistet werden.

2. Verfahren nach Anspruch 1, **dadurch gekennzeichnet, dass** die Funktion mit der höchsten Priorität auf der Anzeige (4) an der ersten Stelle ausgegeben wird.

3. Verfahren nach einem der vorhergehenden Ansprüche, **dadurch gekennzeichnet, dass** die Prioritäten der Funktionen durch Zählen der Benutzungshäufigkeit bestimmt werden.

4. Verfahren nach einem der vorhergehenden Ansprüche, **dadurch gekennzeichnet, dass** die Priorität wahlweise vom Benutzer vorgegeben wird.

5. Verfahren nach einem der vorhergehenden Ansprüche, **dadurch gekennzeichnet, dass** der Benutzer eine neue Funktion eingeben kann, für die die Priorität ermittelt oder festgelegt wird.

6. Verfahren nach einem der vorhergehenden Ansprüche, **dadurch gekennzeichnet, dass** der Benutzer eine Funktion aus der Prioritätsliste löschen kann.

7. Telekommunikationsgerät zur Durchführung des Verfahrens nach einem der vorhergehenden Ansprüche, mit einer Anzeige (4) und mit einer Steuerung (3) für die Funktionen, **dadurch gekennzeichnet, dass** die Steuerung (3) ausgebildet ist, für jede Funktion eine Priorität festzulegen und auf der Anzeige (4) auszugeben.

8. Telekommunikationsgerät nach Anspruch 7, **dadurch gekennzeichnet, dass** die Steuerung (3) einen Zähler aufweist, mit dem die Häufigkeit einer vom Benutzer aufgerufenen Funktion erfassbar ist.

9. Telekommunikationsgerät nach Anspruch 7 oder 8, **dadurch gekennzeichnet, dass** das Telekommunikationsgerät (1) drahtgebunden ist.

10. Telekommunikationsgerät nach Anspruch 7 oder 8, **dadurch gekennzeichnet, dass** das Telekommunikationsgerät (1) drahtlos ist.

11. Telekommunikationsanlage zur Durchführung des Verfahrens nach einem der Ansprüche 1 bis 6, **gekennzeichnet durch** eine Zentrale (11), an die mehrere Telekommunikationsgeräte (1) angeschlossen sind.

12. Telekommunikationsanlage nach Anspruch 11, **dadurch gekennzeichnet, dass** eine Zentrale (11) und ein zentraler Speicher (12) vorsehbar sind, über die die Telekommunikationsgeräte (1) steuerbar sind.

13. Telekommunikationsanlage nach einem der Ansprüche 11 oder 12, **dadurch gekennzeichnet, dass** die Zentrale (11) ausgebildet ist, die Priorität der Funktionen aller in Verbindung stehenden Telekommunikationsgeräte (1) zu bestimmen.

14. Telekommunikationsanlage nach einem der Ansprüche 11 bis 13, **dadurch gekennzeichnet, dass** die Prioritäten der einzelnen Funktionen manuell vorgebbar sind.
